# EUROPEAN PATENT SPECIFICATION

(11) **EP 2 573 967 B1**
(45) Date of publication and mention of the grant of the patent: **15.03.2017**
(21) Application number: 11182745.7
(22) Date of filing: 26.09.2011
(51) Int. Cl.: H04B 10/032, H04L 12/24, H04B 10/2575, H04L 12/703, H04J 14/02, H04Q 11/00

(54) **System for interconnecting nodes attached to a passive optical network**
System zur Verbindung von einem passiven optischen Netzwerk zugeordneten Knoten
Système d'interconnexion de noeuds attachés à un réseau optique passif

(43) Date of publication of application: 27.03.2013
(73) Proprietor: NTT DoCoMo, Inc., Tokyo (JP)
(72) Inventor: Kiess, Wolfgang, 81373 Munich (DE)
(74) Representative: Betten & Resch

(56) References cited:
- CN-A- 101 431 702
- KR-B1- 100 825 745
- US-A1- 2010 098 407
- ZONG, L., TING, W., JI, P., XU, L., CVIJETIC, M.: "A Novel Protection Scheme for WDM-PONs Using Waveband Filters", ECOC 06: EUROPEAN CONFERENCE ON OPTICAL COMMUNICATIONS, September 2006 (2006-09), XP002666915,
- NAVID GHAZISAIDI ET AL: "Survivability Analysis of Next-Generation Passive Optical Networks and Fiber-Wireless Access Networks", IEEE TRANSACTIONS ON RELIABILITY, IEEE SERVICE CENTER, PISCATAWAY, NJ, US, vol. 60, no. 2, 1 June 2011 (2011-06-01), pages 479-492, XP011325722, ISSN: 0018-9529, DOI: 10.1109/TR.2011.2134210

## Description

### FIELD OF INVENTION

The present invention relates to a system for interconnecting one or more nodes attached to a passive optical network and to a remote node for a passive optical network.

### BACKGROUND OF THE INVENTION

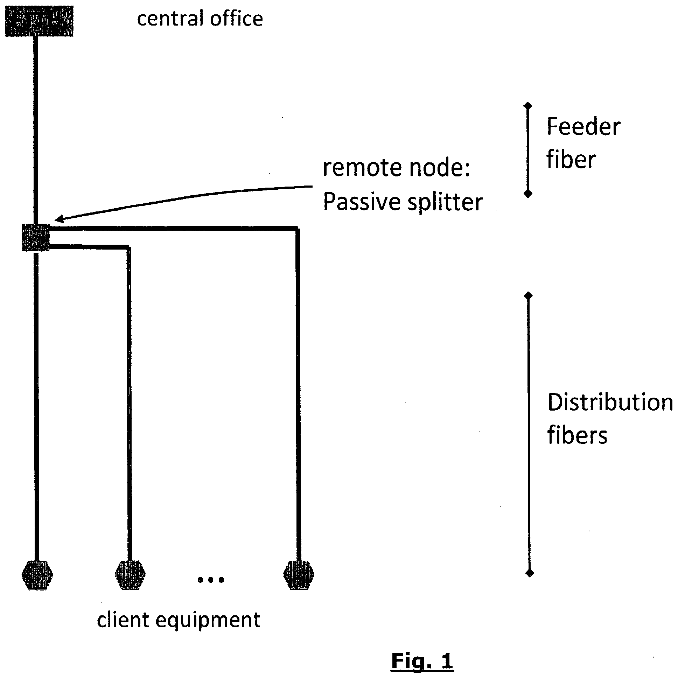

The standard physical fiber layout for passive optical network based fiber-to-the-home systems (FTTH) is a tree with 32, 64 or 128 leaves, where the leaves are installed at the customer side. As shown schematically in Fig. 1, the trunk of the tree is called the "feeder section", the branches are the "distribution fibers", leaves are called ONU (optical network unit) and the root in the central office is the OLT (optical line terminal). The point where the trunk is split into the different branches is called "remote node". Due to cost and maintenance reasons, this remote node is designed as passive device. It splits the downstream signal and distributes it to the distribution fibers and combines the upstream signal from the distribution fibers to transmit it on the feeder section.

The deployed FTTH system may e.g. be a time-division multiplexing PON, e.g. an EPON, GPON, or 10G-PON. The splitter is thus a power splitter that splits the incoming optical signal from the feeder evenly among the distribution fibers.

In another scenario the deployed FTTH system may comprise a WDM PON which uses a wavelength demultiplexer, e.g. an arrayed waveguide grating (AWG).

For the access network sharing case, the mobile operator will use the fibers of the leaves to attach its basestations to its own wired (core) network. Several approaches can be followed for this. The most obvious one is to treat a basestation like any other user and add it as client to the fixed operators' network. While this works from a technical perspective, the required bandwidth differs strongly between a single normal user and a basestation that multiplexes traffic of hundreds of users. Furthermore, this might also create organisational issues, e.g. with respect to traffic separation. A more viable approach is adding further wavelengths to the already deployed passive optical network to attach the basestations. This provides sufficient bandwidth and allows separating the traffic easily. Independent of the used approach however, the underlying treelike fiber structure is vulnerable to faults as will be outlined below.

In the following, the term "basestation" will be used when referring to a 'client' node of a mobile operator being connected as a node to a leaf of a passive optical network (PON). Such a "basestation" is composed of radio layer equipment as well as optical layer equipment. For simplicity and to avoid confusion, this term is used in the following to refer to the collection of these equipments. The term optical network unit "ONU" will be used whenever this refers to a client node or a node of the fixed operator being connected as a node to a leaf of a passive optical network (PON).

The treelike fiber structure of a fiber to the home (FTTH) system does not provide redundancy. Faults like a fiber cut can disconnect up to 128 leaves. If the fibers only attach fixed operator's customers, this risk normally is tolerated for cost reasons. If some of the leaves host basestations, the picture changes. As a basestations serves hundreds of customers, the number of users affected by a fault is much higher. Thus, while the fixed operator might not require protection against such faults, protection is important for the mobile operator.

There exist four protection schemes for passive optical networks that have been standardized by ITU in the ITU-T Recommendation G.983.1(ITU-T, 2004). They all involve partial or complete duplication of either the fiber tree and/or the active networking equipment (i.e. the central office side OLTs and the client side optical network units ONUs). The type A scheme provides a redundant feeder fiber; the type B scheme duplicates the OLT side equipment as well as the feeder fiber; the type C scheme duplicates the complete infrastructure, connecting each ONU to two fiber trees; the type D also uses a full duplication but adds an additional link between the remote nodes that allows to also attach ONUs that do not require protection (and thus do not require distribution fiber redundancy). The first two schemes add protection (for the feeder fiber) for all nodes and are thus different from the approach of the present invention described later that is designed for a mixture of protected and unprotected nodes. Type C scheme also is different as it duplicates the complete equipment and protects all nodes. Also the type D scheme is not suited for the present application scenario. It results in some protection (of the feeder fiber) even for those nodes without protection requirements. It duplicates the fiber infrastructure but still requires a joint wavelength assignment; it is not possible to run an own TDM PON on each of the two sub-trees. Thus, the cost for the unprotected nodes may be higher than with the scheme proposed later by the present invention. Last but not least, scheme D introduces the protection link between the remote nodes while the proposed approach is different.

A number of different solutions exist that vary the idea to duplicate fibers, e.g. Chan, T.-K., Chan, C.-K., Chen, L.-K., & F., T. (2003), A self-protected architecture for wavelength-division-multiplexed passive optical networks. IEEE Photonics Technology Letters, 15 (11), 1660-1662, where the feeder section is deployed as ring and neighbor-ONUs are connected with an additional fiber link thus protecting each other in case of a distribution fiber cut.

Ghazisaidi et al. (Ghazisaidi, N., Scheutzow, M., & Maier, M. (2010). Survivability Analysis of Next-Generation Passive Optical Networks and Fiber-Wireless Access Networks. IEEE Transactions on Reliability) propose to install a wireless mesh network that can be used to communicate in case the fixed fiber network fails. Chinese Patent Application No. CN000101431702A proposes to use wireless protection as well, but between pairs of neighboring ONUs. In case of a failure, an ONU can activate a link to a neighbor ONU via a wireless channel.

In contrast, the later described approach proposed herein establishes the protection between complete trees rather for single ONUs/basestations. As will become apparent later the two ONUs/basestations are in different fiber trees and the link not only transports the protection signal of a single ONU/basestation but also those of the other ONUs/basestations on the same tree. While the scheme of CN000101431702A provides protection from a cut in the distribution section, the proposed scheme protects the feeder section.

Zong et al.(Zong, L., Ting, W., Ji, P., Xu, L., & Cvijetic, M. (2006 September). A Novel Protection Scheme for WDM-PONs Using Waveband Filters. ECOC 06: European Conference on Optical Communications 2006) propose a protection scheme (only for the distribution fibers) that requires an active remote node and an additional physical protection path. This path connects the remote node to the first ONU, the first ONU with the second ONU, the second ONU with the third ONU, and so on until the last ONU. In case a distribution fiber fails, the remote node (that requires active electronic components in this configuration) can switch the wavelength for the affected ONU to the protection path.

Compared to the approach presented later herein, there are four differences. First, the architecture requires an active remote node and does not work with a passive configuration. Second, all ONUs require two fiber connections and thus much newly deployed fiber while the later described approach requires only few nodes to have such a 'dual-homing'. Third, the solution of Zong et al. only protects the distribution fibers but does not survive a cut in the feeder fibers. And fourth, while the later proposed approach (at least partly) survives the failure of the remote node, the scheme of Zong et al. will be completely disconnected in such a case.

Son et al. (Son, E., Han, K., Lee, J., & Chung, Y. (2005). Survivable network architectures for WDM PON. OFC'05: Proceedings of Optical Fiber Communication Conference) introduce the idea to add a link between the remote nodes to protect the two adjacent WDM PONs, a variation of the above-presented ITU-T standard scheme D. This link allows protecting the feeder fiber, but also requires a coordinated wavelength assignment between the two PONs. Furthermore, the protection link is established between the remote nodes in contrast to the later proposed approach that establishes this link between the leafs.

Similar subject-matter is found in US-200100098407 A1 (Zong et al: A Novel Protection Scheme for WDM-PONs Using Waveband Filters. Ecoc September 2006) shows the use of an extra protection path at a remote node and an extra path linking all leaves of a PON.

Based on these prior art approaches it is an object of the invention to provide an approach for enhancing the interconnection between passive optical networks in a way which enhances their protection or their capacity.

It is desirable to support two types of nodes on the same fiber infrastructure: cheap, unprotected nodes with low, varying bandwidth requirements for the fixed operator and more expensive, protected basestations with high-volume, steady traffic for the mobile operator.

### SUMMARY OF THE INVENTION

According to one embodiment there is provided a system for interconnecting one or more nodes attached to the leaves of an optical distribution network (ODN), comprising: A first and a second optical distribution networks respectively comprising a remote node for distributing signals from a central office and/or an optical line terminal to a plurality of leaf nodes connected to said optical distribution network;
a link connecting a first leaf node connected to the first optical distribution network to a second leaf node connected to the second optical distribution network, wherein the remote node of the second optical distribution network is adapted to forward an optical signal from said second leaf node which has received the signal from said first leaf node to the other leaf nodes of said second optical distribution network.

By interconnecting the leaf nodes of the separate optical distribution networks a further signal distribution path is provided which can be used to e.g. protect against a connection failure or to increase the capacity.

According to one embodiment said plurality of leaf nodes comprise one or more basestations; and/or said first leaf node and said second leaf node are base stations.

This is a particularly advantageous implementation of a use case, since it enables the protection of base stations against a connection failure, and for base stations such a failure would be rather significant, since usually they have many end users being connected to them. Therefore an efficient protection scheme for the base stations against a connection failure is highly desirable.

According to one embodiment optical distribution networks shared between a fixed network operator and a mobile network operator, the clients of said fixed network operator comprising as clients optical network units which are connected as leaf nodes without being protected by being connected to at least one other leave of another optical distribution tree, and the clients of said mobile network operator comprising basestations which are connected as leaves nodes are protected against failure by being connected to at least one other leave node of said other optical distribution network.

This is an advantageously efficient implementation for a shared network where the most sensitive and relevant nodes, the base stations, are provided with failure protection while the less relevant optical network units (ONUs) are not protected.

According to one embodiment said system is adapted to forward, in case of a failure of the connection between a central office and the remote node of said second optical distribution network, said optical signal intended for the leaf nodes of said second optical distribution network via the first optical distribution network to said first leaf node, via said link from said first leaf node to said second leaf node, and via said remote node of said second optical distribution network from said second leaf node to the other base stations connected to said second optical distribution network, and/or
said system is adapted to forward, in case of a failure of the connection between the remote node of said second optical distribution network and said second leaf node, said optical signal intended for said second leaf node of said second optical distribution network via the first optical distribution network to said first leaf node and via said link from said first leaf node to said second leaf node.

In this manner a failure protection against a connection failure in the trunk line (first alternative) or at the leave node (second alternative) can be efficiently implemented.

According to one embodiment the link between said first leaf node and said second leaf node is a wireless link.

This is a particularly efficient and advantageous implementation, because it requires no cable infrastructure and can make use of the already existing capabilities of the basestations to provide a wireless link.

According to one embodiment there is provided remote node for an optical distribution network which connects a central office and/or or an optical line terminal with a plurality of optical nodes, said remote node comprising:
An input unit for being connected to at least one feeder fiber for receiving one or more signals from said central office and/or an optical line terminal;
a plurality of output units which are to be connected to respective distribution fibers of said optical distribution network, said distribution fibers being connected to respective optical nodes forming leaf nodes in said optical distribution network;
a splitting unit for distributing said one or more signals to said plurality of output units;
a signal path for transmitting an optical waveband from a first leaf node connected to said optical distribution network through said input unit and said splitting unit to other leave nodes attached to said optical distribution network.

In this manner there is provided an efficient way of distributing a signal (e. g. a "protection signal" which e.g. due to some connection failure cannot be received form the central office) which was received from a different distribution tree to the distribution tree where the connection failure occurs.

According to one embodiment the optical distribution further comprises one or more of the following:
said signal path comprises a first waveband demultiplexer connected said first leaf node for demultiplexing the optical waveband received from said first leaf node; and/or
said signal path comprises a waveband multiplexer connected to said input unit through which said distribution tree receives the signals to be distributed to the nodes of said optical distribution tree, said waveband multiplexer being adapted for multiplexing said optical waveband onto said input unit.

By using a first waveband demultiplexer in said signal path it becomes possible to extract the signal which may have been received by the first leave node (such as e.g. a base station) from the leaf node of another distribution tree (a basestation connected to the other optical distribution network, and the demultiplexed signal can then be fed to the input unit of the remote node so that it can be forwarded to the other leaf nodes of said (first) optical distribution network.

By - additionally or alternatively - using a (further) waveband multiplexer in said signal path which is connected to the input unit it becomes possible to feed the signal which is to be distributed to the other leaf nodes and which may have been received from another distribution tree into said (first) distribution tree so that it can be forwarded to the other leaf nodes.

According to one embodiment said remote node comprises a (power) splitter unit connected to said input unit for splitting the one or more signals received from the input unit and for distributing them to the leaf nodes of said distribution tree, or said remote node comprises a wavelength demultiplexer, such as an arrayed waveguide grating, for distributing the one or more signals received from the input unit to the leaf nodes of said distribution tree.

Using a splitting unit is a suitable implementation for a case where the system is a time-division multiplexing PON.

On the other hand, using a wavelength demultiplexer is a suitable implementation for a case where the system is a WDM PON. In case of an arrayed waveguide grating being used as a wavelength demultiplexer, it is not necessary to have a separate multiplexer for feeding the signal which is to be distributed to the other leaves, since this signal may be fed to a separate input provided by the arrayed waveguide grating. The "input unit" therefore in this case may comprise the inputs of the arrayed waveguide grating. However, if a splitter is used for distributing the signal to the other leaves, then it may be necessary to multiplex the signal which is to be distributed from one leaf to the other leaves by a multiplexer so that it is distributed by the splitter to the other leaf nodes.

According to one embodiment the said remote node is adapted such that the optical waveband is transmitted upstream towards said demultiplexer where said optical waveband is split off from the remaining signal, further transmitted to said multiplexer and from there fed downstream towards said splitter to be distributed to the other nodes of said distribution tree.

Alternatively said optical waveband is transmitted directly from said first leaf node via a dedicated cable and without need for demultiplexing to said input unit.

This is an efficient implementation of the signal path for distributing the signal received form a different distribution tree. In one alternative a demultiplexer is used to extract the signal which may be received from another basestation, and the multiplexer is then used to feed it into the downstream signal path so that it can be forwarded to the other leaves of said distribution tree, e.g. by a splitter or a wavelength multiplexer.
In another alternative there may be provided a dedicated cable or link to forward the optical waveband from the leave node to the input unit of the optical distribution tree.

According to one embodiment said first leaf node is a first base station which is connected via a link to a second base station connected to another optical distribution network;
said optical waveband is an optical signal which is received by said first leaf node being a first base station from said lead node connected to a different optical distribution network being a second base station and then transmitted from said first base station via said signal path, preferably said demultiplexer, said multiplexer and said splitter, to the other optical nodes of said distribution tree, where one or more of said other optical nodes are third base stations.

This is an advantageous implementation where the apparatus can be used to protect base stations against a connection failure.

According to one embodiment said first base station strips off its own wavelength of the optical waveband and forwards the remaining part of the optical waveband to said demultiplexer.

This allows the basestation to decode the optical signal.

According to one embodiment wherein the optical waveband received from said first leaf node comprises a waveband, preferably carrying a protection signal which has been received by said first leaf node from a leaf node connected to a different optical distribution network, said remote node further comprising:
a filter located between said splitter and said first base station for filtering the waveband of said protection signal.

In this manner a collision of the protection waveband received from the different distribution tree and transmitted with the same signal being transmitted downstream after having been fed into the downstream path can be avoided.

According to one embodiment said demultiplexer is a multiplexer/demultiplexer; said multiplexer is a multiplexer/demultiplexer;
said remote node being adapted such that signals from said third base stations attached to said optical distribution network are transmitted upstream, demultiplexed by a multiplexer/demultiplexer comprised by said input unit, are forwarded to a multiplexer/demultiplexer connected to said first leaf node and forwarded via said multiplexer/demultiplexer towards said first leaf node, transmitted from said first leaf node to said second leaf node, and forwarded from said second leaf node towards an central office or an optical line terminal.

This is a suitable and advantageous implementation of the signal path in the upstream for protecting against a connection failure.

According to one embodiment said optical waveband is a protection signal which is transmitted via said second leaf node, the link between said second and said first leaf node, said demultiplexer, said multiplexer and said splitter towards the other leaf nodes attached to said optical distribution network to avoid a failure of the nodes attached to said optical distribution network
In this way a protection against a connection failure can be achieved.

According to one embodiment the remote node or the system for interconnecting nodes comprises one or more of the following:
a module for performing a wavelength conversion of the optical waveband when it is transmitted by either said second leaf node or by said first leaf node;
a detector for detecting a failure in said first distribution tree and for triggering the transmission of said optical waveband via a leaf of said second distribution tree to said first distribution tree.

In this manner a suitable generation of the protection signal and its transmission to the distribution tree where the failure occurred via a different distribution tree can be implemented.

According to one embodiment there is provided an integrated system which comprises a system for interconnecting one or more nodes according to one of the embodiments and an apparatus for transmitting an optical waveband according to one of the embodiments.

### BRIEF DESCRIPTION OF THE DRAWINGS

Fig. 1 schematically illustrates a configuration of a passive optical network (PON).
Fig. 2 schematically illustrates an interconnection system according to an embodiment of the invention.
Fig. 3 schematically illustrates an apparatus according to an embodiment of the invention.
Fig. 4 schematically illustrates a scenario to which embodiments of the invention may be applied.
Fig. 5 schematically illustrates an interconnection system according to an embodiment of the invention.
Fig. 6 schematically illustrates an interconnection system according to a further embodiment of the invention.
Fig. 7 schematically illustrates a possible wavelength allocation in an interconnection system according to an embodiment of the invention.
Fig. 8 schematically illustrates an interconnection system according to a further embodiment of the invention.

### DETAILED DESCRIPTION

The present invention will now be described by means of exemplary embodiments in connection with the accompanying drawings.

First of all, before explaining embodiments of the invention, the terms which are used in the following description are explained in connection with Fig. 1.

A central office (which may comprise an optical line terminal OLT and a mobile network operator) is connected to a plurality of nodes (in Fig. 1: client equipment) through an optical distribution network (ODN). The ODN comprises a remote node which comprises a (passive) splitter or splitting unit, at least one input unit and a plurality of output units. Furthermore, the ODN comprises at least one feeder fiber and a plurality of distribution fibers. The input unit of the remote node is connected via a feeder fiber to the central office. The splitter receives the signal which is received by the input unit from the central office through the feeder fiber, splits it up into a plurality of output signals, distributes the plurality of output signals to a plurality of respective output units. The output units of the remote node are connected through respective distribution fibers to optical nodes which form the client equipment. The nodes which are connected to the distribution fibers can be optical network units (ONU) or basestations.

The term optical distribution network (ODN) in the following refers to the combination of remote node, feeder fiber and distribution fibers. The term remote node refers to a unit which is connected between the feeder fiber and the distribution fibers and which comprises an input unit for being connected to the feeder fiber, a splitter and a plurality of outputs for being respectively connected to the distribution fibers. The ODN therefore forms a tree structure by which the signal which is received from the central office is branched to a plurality of (leaf) nodes.

The optical distribution network (ODN) together with the nodes connected to the distribution fibers and the central office and/or the optical line terminal forms a passive optical network (PON).

Such a remote node according to one embodiment is modified by further comprising a signal path for transmitting an optical waveband from a first leaf node connected to said optical distribution network through said input unit and said splitting unit to other leave nodes attached to said optical distribution network.

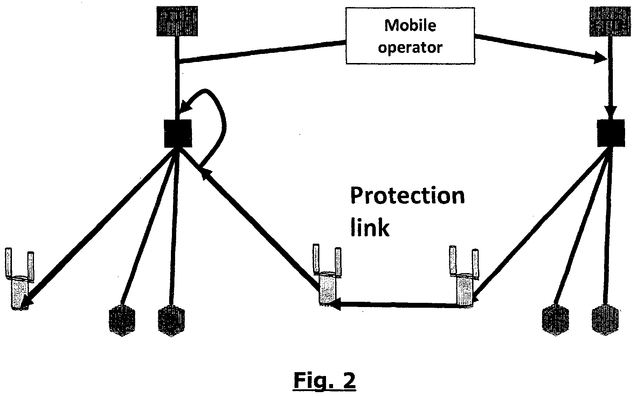

This may be implemented in one embodiment by a signal path for transmitting an optical waveband which is received by one of said output units from a first leaf node connected to said optical distribution network to said input unit of the remote node and from there through the splitting unit to the other leave nodes connected to said optical distribution network. This is schematically illustrated in Fig. 2 by the signal path leading from one of the outputs of the splitting unit to its input.

The remote node according to such an embodiment may be used in a system for interconnecting nodes which are connected to different distribution trees of a passive optical network.

This will now be explained in somewhat more detail in connection with Fig. 2 which illustrates such a system. In the embodiment illustrated therein, there are two distribution trees formed by optical distribution networks, each having a plurality of leaf nodes connected to it, and each optical distribution network being shared by a fixed network provider (FTTH) and a mobile network provider (Mobile operator).

The optical distribution networks receive the signals from both providers or a central office and distribute them - via a remote node comprising as e.g. a splitter or splitting unit illustrated as a square - to their leaf nodes which comprise "normal" fixed network optical nodes and are illustrated as hexagons and which further comprise basestations illustrated as antennas in Fig. 2.

Assuming that the left-hand distribution tree has some failure, e.g. due to a connection failure between the central office and the remote node. This would mean that not only the normal optical nodes are disconnected but also the basestations which may each have connected thereto quite a number of terminals.

To avoid such a negative effect, there is provided a "protection link" between a basestation connected to the right-hand side optical distribution network and a basestation connected to the left-hand side optical distribution network. In this manner the left-hand-side distribution tree and the right-hand-side distribution tree are connected.

The signal which is intended to be sent from the mobile network operator to the left-hand distribution tree is then instead sent as a "protection signal" to the right-hand-side distribution tree. Via the base station of the right-hand-side distribution tree and the protection link it is then forwarded to the basestation at the left-hand-side distribution tree.
In this manner the protection signal reaches the left-hand-side distribution tree despite the connection failure.

However, in order not to reach only one basestation of the left-hand-side distribution tree, according to one embodiment the protection signal is then forwarded also to the other basestations of the left-hand-side distribution tree. For that purpose there is according to one embodiment provided some modification of the "remote node" of the optical distribution network of this distribution tree. This is illustrated in Fig. 2 by the additional signal path connecting the base station on the left-hand-side distribution tree to the input unit of the remote node. This can be implemented by a modified remote which provides such an additional signal path leading from one of its output units to its input unit, as explained before. In this manner the signal which is received by the basestation on the left-hand-side distribution tree via the protection link from the basestation on the right-hand-side distribution tree is forwarded to the input unit of the remote node and then through the splitting unit and its outputs forwarded to the other nodes of the left-hand side-distribution tree.

By providing this additional signal path which enables the forwarding of a signal from one leaf of the distribution tree to the other leaves of the distribution tree it becomes possible to compensate for a failure in the trunk (feeder) fiber. This is achieved in one embodiment by routing the signal intended for the leaves on the left-hand-side optical distribution networks through the right-hand-side optical distribution network, from there via the basestation and the protection link to the basestation connected to the left-hand-side optical distribution network, and then via the additional signal path and the distribution unit to the other leaves of the left-hand-side optical distribution network.

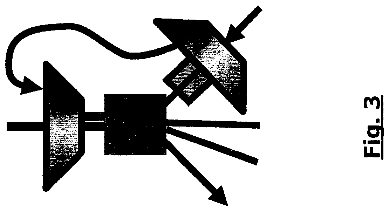

According to one embodiment the modification relates to the remote node which in this embodiment comprises a "splitter" and which is illustrated as square in Fig. 2. The modification according to one embodiment will now be explained in somewhat more detail in connection with Fig. 3.

Fig. 3 illustrates a remote node according to one embodiment. According to one embodiment, as illustrated in Fig. 3, there is provided a demultiplexer which receives from the base station the signal including the protection signal and splits off the protection signal. This demultiplexer may be regarded as forming part of or being connected to an output unit of the splitter. Via the additional signal path which is illustrated as curved line, this split-off protection signal is then fed into a multiplexer and from there into the splitter. The multiplexer may be regarded as forming a part of the input unit of the splitter or as being connected thereto. From the splitter the signal is then distributed to all the nodes which are connected to the leaves of the distribution tree and thus to all of the basestations connected thereto. Therefore the negative effect of the connection failure can be avoided in this manner.

The embodiment illustrated in Fig. 3 may be modified in several ways. For example, the protection signal which is received by the basestation via the protection link may not be multiplexed into the signal path but may instead be transmitted via a separate, dedicated link from the basestation to the distribution unit, e.g. by a separate cable. In this case the demultiplexer which is shown in Fig. 3 will not be necessary, and instead the separate cable may directly connect the basestation and the multiplexer which forms the input unit of the remote node.

A further modification of the embodiment shown in Fig, 3 will now be explained. The embodiment illustrated in Fig. 3 is a suitable implementation for a TDM PON. However, in another scenario there may be used a wavelength division multiplex (WDM) PON as well. In this case the distribution unit illustrated as square in Fig. 3 is not a (power) splitter but instead a wavelength splitter or wavelength demultiplexer, e.g. an arrayed waveguide grating. In such a case the multiplexer shown as input unit of the splitting unit in Fig. 3 may not be necessary, since the wavelength demultiplexer such as the arrayed waveguide grating may provide a separate input for the protection signal and then distribute the protection signal to the other leaves of the distribution tree.

Further embodiments of the invention will now be described in the following.

According to one embodiment there is proposed a system architecture to combine protected and unprotected nodes on the same fiber plant for sharing the last mile access network between a mobile and a fixed operator. The proposed approach provides resiliency and fault protection for the basestations on top of the unprotected network that the fixed operator needs to attach its customers. The result is a cheap, unprotected network for the fixed operator and a more complicated but protected network for the mobile operator running on the same physical fibers in parallel. This should be achieved with minimal new fiber deployment as trenching ducts for new fibers can cost several 10,000 US$ per kilometre and is the main cost block of access networks.

The application scenario of an embodiment of the invention is the sharing of the fiber access network between a fixed operator and a mobile operator: the mobile operator uses the fiber-to-the-home (FFTH) infrastructure of the fixed operator to backhaul its base stations.

Current FTTH-systems are deployed as passive optical networks (PONs) in a tree topology using an optical distribution network. A fault like a fiber cut can thus disconnect some or all nodes attached to the tree. The goal of this invention is to protect basestations from such faults in this scenario.

To this end, according to one embodiment there are combined two FTTH-trees for mutual protection. Existing schemes that follow this idea establish the protection connection between the tree's branching points. In the embodiment of the invention however, the protection signal is exchanged between two leafs of the trees.

This has a number of advantages, especially if the protection should be added to an already deployed infrastructure. First of all, a FTTH-tree has only one branching point but between 32 and 128 leafs. Thus, there are many more possible connection points, allowing for shorter and thus cheaper links. Furthermore, the protection link can be realized wirelessly as the basestations are powered and at elevated positions. In contrast, branching points are unpowered and often installed underground.

According to one embodiment there are two adjacent fiber trees that provide the fixed operator with two sets of unprotected ONUs and adds the base stations to these trees. The trees are used for mutual protection and the link between the two trees is established between one basestation in the first and a second basestation in the second tree. The protection signal for nodes on the second tree is transmitted from the central office to the first basestation, forwarded to the second basestation and then distributed by the second basestation in the second tree. To enable this distribution, the remote node is modified such that the second basestation can transmit to and receive signals from all other basestations in the same tree. Protection for the first tree is not presented here to simplify explanation. However, the skilled person readily recognizes that it can be provided by mirroring the second tree configuration.

The embodiment solves the problem to support two types of nodes on the same fiber infrastructure: cheap, unprotected nodes with low, varying bandwidth requirements for the fixed operator and more expensive, protected basestations with high-volume, steady traffic for the mobile operator.

One advantage of embodiments of the invention is lower costs for the wired connection of basestations. It can reduce the amount of newly deployed fiber and thus avoids the CAPEX for this deployment. It does this through sharing the fiber infrastructure with a standard FTTH system while fulfilling the protection requirements of basestations. It helps to bridge the gap between the two different requirement sets: low-cost unprotected end user links for FTTH in contrast to higher-cost and protected links to basestations for the mobile operator.

In contrast to existing solutions that can be modified to support the sharing scenario (e.g. type D protection (ITU-T, 2004) and the solution of Son et. al. (Son, Han, Lee, & Chung, 2005)), the link to transmit the protection signals is established between the leafs in two fiber trees. As there are many more leafs than remote nodes and these leafs are geographically distributed, there are many more connection possibilities. This results in less distance that has to be bridged by the link and thus less money to be spent on it. Furthermore, it is the unique feature of this invention that the protection link can be easily realized with a wireless link, thus avoiding civil engineering altogether.

Further embodiments of the invention will be described in the following in somewhat more detail.

According to one embodiment there are combined two adjacent fiber trees to provide protection for each other. In contrast to existing schemes, the link between the trees is established between two leafs of the two fiber trees. To distribute the protection signal in the trees, the remote node is modified accordingly.

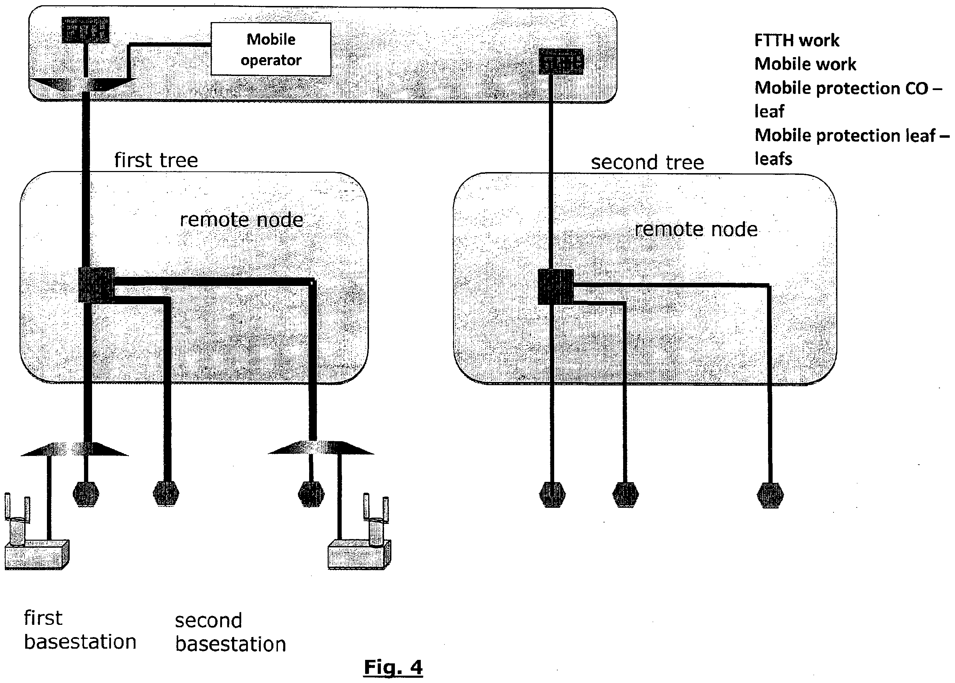

Fig. 4 shows a view of the system where only the working links are shown. The clients of the fixed operator (the hexagons) are attached to the trees as in a standard PON configuration and are not protected. The first tree and the second tree in Fig. 4 respectively comprise remote nodes as illustrated in Fig. 4. The basestations can be attached to any one of the fiber trees as well. For the fixed users, in one embodiment a TDM PON with a shared wavelength is used, alternatively there may be used a WDM PON. Each basestation is attached via an own wavelength or waveband due to the higher bandwidth requirements, thus the additional link shown in the first tree represents a waveband of two lambdas in this example for attaching the two base stations. This additional link is illustrated in Fig. 4 by the connections of the first tree being shown as twice as thick as the connections of the second tree. This illustrates the additional wavelength in the first tree to accommodate the signals for the base stations attached thereto. As the example shows, the basestations can be attached to an existing system by simply adding a number of waveband (de-) multiplexers. The corresponding signal is fed to the first tree by the central office (CO) operated by a mobile operator, while the ONUs receive their signal from a fixed network operator, in Fig. 4 illustrated as FTTH. In the second tree the signal provided to the ONUs is transmitted using a first waveband, and in this first tree also the fixed network signal is transmitted to the ONUs using said first waveband, the signals being provided by the fixed network operator illustrated as FTTH. The base stations in the first tree, however, receive their signal over a second waveband which is provided by the mobile network operator illustrated in Fig. 4.

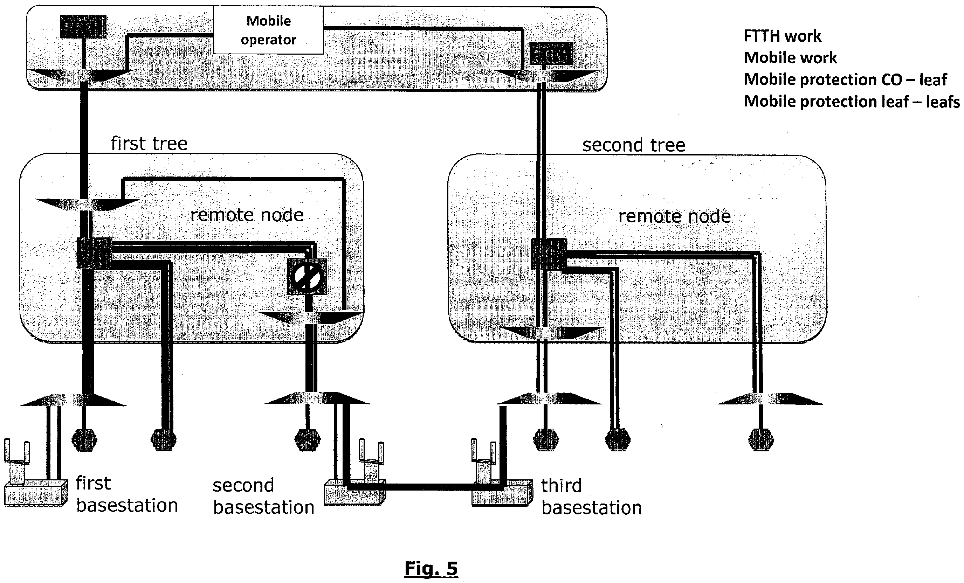

The same system as shown in Fig. 4 but now with the protection configuration for the first and second basestation on the left fiber tree is shown in Fig. 5. Again first tree and the second tree in Fig. 4 respectively comprise remote nodes as illustrated in Fig. 5. The scenario in Fig. 5 illustrates how the protection of the first tree against a failure in the trunk connection can be obtained. In this case the signal to the first and second base stations cannot be transmitted any more from the mobile network operator via the first tree. To cope with this situation a protection signal is transmitted via another path as will be explained in the following.

The protection signal is transmitted from the central office (CO, in the Figure labelled Mobile operator) in a third waveband over the second fiber tree towards the third basestation on the second fiber tree. The "protection signal" is the signal which is actually intended for the first distribution tree but cannot be sent to its nodes due to a connection failure. Instead, the signal is transmitted as "protection signal", possibly via a different waveband, here the third waveband, to and through the second distribution tree. The signal is transmitted towards the third basestation and, not illustrated in Fig. 5, translated there to a fourth waveband. From the third base station it is then transmitted (possibly via a wireless interface) to the second basestation. The second base station splits of its own protection wavelength from the protection waveband (not shown in the figure) and transmits the remaining wavelengths in the fourth waveband via its distribution fiber towards the remote node. In the remote node, the fourth waveband is split off from the remaining spectrum by a first waveband (de-) multiplexer and transmitted to a second waveband (de-) multiplexer that is directly attached to the passive splitter of this remote node (the square in the Figure). By transmitting the fourth waveband to the splitting unit, e.g. a passive splitter or a wavelength demultiplexer, it gets transmitted to all attached distribution fibers and thus also to the first basestation. Note that the fourth waveband is also transmitted downstream via the distribution fiber to the second basestation. However, according to one embodiment to avoid collisions, this distribution fiber contains a wavelength filter that blocks the fourth waveband which is the waveband of the protection signal.

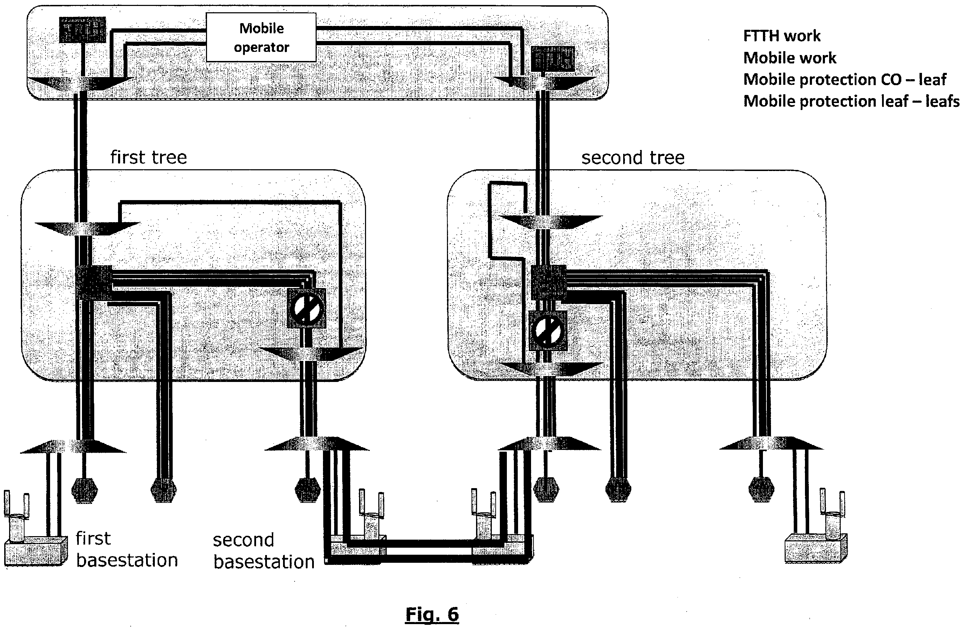

To transmit a protection signal in the upstream, the first basestation uses a lambda in the fourth waveband as well and transmits it via its distribution fiber towards the remote node. After passing the passive splitter (that serves as combiner in the upstream), the fourth waveband passes the second waveband (de-) multiplexer. It is split off and transmitted to the first waveband (de-) multiplexer and then forwarded via the distribution fiber to the second basestation. This basestation then transmits the protection signal (probably together with its own upstream protection wavelength) via the protection link towards the third basestation. Also here, a wavelength translation is performed towards the third waveband. The third basestation then transmits the third waveband towards the central office via the normal path along the second fiber tree. The complete protection scheme for both fiber trees is shown in Fig. 6.

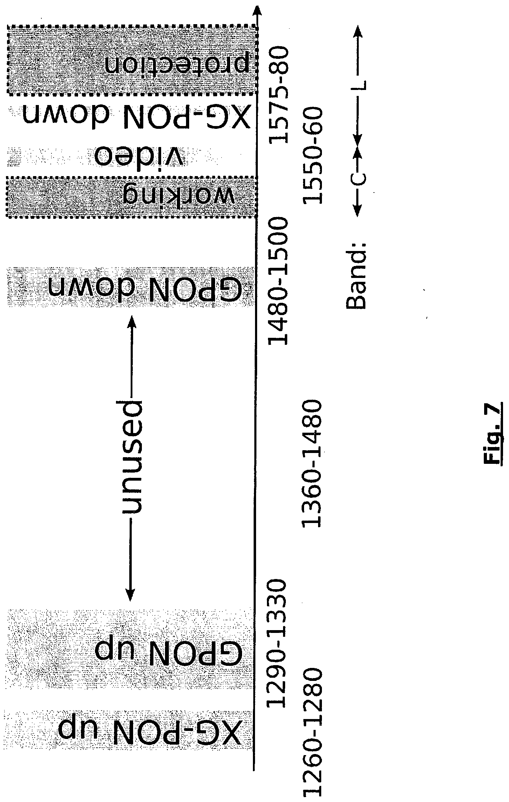

Fig. 7 shows an example of the configurations for the waveband filters according to one embodiment. This makes clear why in a preferred embodiment a wavelength translation is performed before transmitting the protection signal from the second basestation to the first basestation: it allows using a single type of waveband (de-) multiplexers in the remote nodes. Using only one type of (de-) multiplexer strongly simplifies the remote node, its configuration, and deployment logistics.

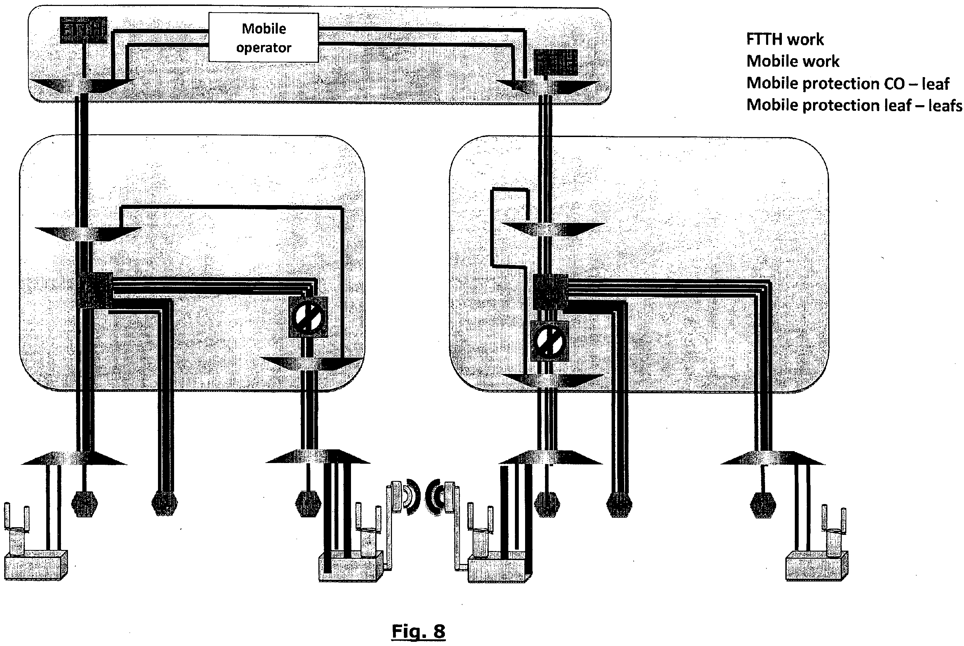

It should be noted that the protection link between the second and the third basestation can also be established wirelessly as shown in Fig. 8. A basestation is attached to an electric power source and is installed at an elevated position. Thus, instead of realizing the protection link via a fiber connection, the information can also be transmitted e.g. via a microwave link, thus avoiding the civil engineering necessary when deploying new fiber. It should be noted also that this scheme does not require the protection link to be always on: it may be only activated in the failure case.

In the proposed protection scheme according to the described embodiments, all basestations are protected from a feeder fiber cut. Furthermore, the basestations that implement the protection link (in the example the second and the third basestation) are protected from a cut of their distribution fiber and from a damage of the remote node, as they are dual homed via the protection link.

While the present invention has been described by exemplary embodiments, it will be understood that these embodiments may be modified without departing form the scope of the claims. For example, the use of the link between basestations of different distribution trees has been explained in connection with the purpose to obtain a protection against a connection failure. However, since the proposed configuration in fact adds a further signal distribution path, another purpose or effect which may be achieved with this configuration is to increase the capacity or the bandwidth. This can e.g. be useful if there is network congestion. Then the further signal distribution path can be used to circumvent the congestion. Alternatively the further distribution path may be used to transport low priority or best effort traffic.

Furthermore, it will be readily understood that while the embodiments described herein before explain only the connection between two distribution trees by connecting their leave node through a link, it is also possible to connect more than two such distribution trees. For example, the protection signal may be transmitted from the first base station of a first distribution tree to a second base station of a second distribution tree and from there to a third base station of a third distribution tree. In such a case the second distribution tree (or its second base station) which is connecting the first and the third distribution trees (or the first and third base stations) may be regarded as forming a "link" which interconnects the first and third base stations in order to transmit the protection signal.

As a matter of course, even more than three distribution trees may be connected in an analogous manner.

## Claims

1. A system for interconnecting one or more leaf nodes attached to the leaves of an optical distribution network (ODN), comprising:
A first and a second optical distribution network respectively comprising a remote node for distributing signals received by said remote node via a trunk feeder fiber from a central office and/or an optical line terminal to a plurality of leaf nodes connected to said optical distribution network;
a link connecting a first leaf node connected to the first optical distribution network to a second leaf node connected to the second optical distribution network, wherein
the remote node of the second optical distribution network comprises an input unit being adapted to receive signals from the central office and/or optical line terminal of the second optical distribution network, the system being **characterised by** said remote node further comprising an additional signal path connecting said second leaf node to the input unit of said remote node to enable said remote node to forward an optical signal from said second leaf node which has received the signal from said first leaf node to the other leaf nodes of said second optical distribution network to thereby enable to compensate for a failure in said trunk fiber by routing the signal intended for the leaf nodes of said second optical distribution network to said first optical distribution network, via said first leaf node and said link to said second leaf node and then via the additional signal path to the leaf nodes of said second optical distribution network.

2. The system of claim 1, wherein said plurality of leaf nodes comprise one or more basestations; and/or
said first leaf node and said second leaf node are base stations.

3. The system of claim 1 or 2, wherein
said optical distribution network is shared between a fixed network operator and a mobile network operator, the clients of said fixed network operator comprising as clients optical network units which are connected as leaf nodes without being protected by being connected to at least one other leave of another optical distribution tree, and the clients of said mobile network operator comprising basestations which are connected as leaves nodes are protected against failure by being connected to at least one other leave node of said other optical distribution network.

4. The system of one of claims 1 to 3, wherein
said system is adapted to forward, in case of a failure of the connection between a central office and the remote node of said second optical distribution network, said optical signal intended for the leaf nodes of said second optical distribution network via the first optical distribution network to said first leaf node, via said link from said first leaf node to said second leaf node, and via said remote node of said second optical distribution network from said second leaf node to the other base stations connected to said second optical distribution network, and/or
said system is adapted to forward, in case of a failure of the connection between the remote node of said second optical distribution network and said second leaf node, said optical signal intended for said second leaf node of said second optical distribution network via the first optical distribution network to said first leaf node and via said link from said first leaf node to said second leaf node.

5. The system of one of claims 1 to 4, wherein
The link between said first leaf node and said second leaf node is a wireless link.

6. A remote node for an optical distribution network which connects a central office and/or or an optical line terminal with a plurality of optical nodes, said remote node comprising:
An input unit for being connected to at least one feeder fiber for receiving one or more signals from said central office and/or an optical line terminal;
a plurality of output units which are to be connected to respective distribution fibers of said optical distribution network, said distribution fibers being connected to respective optical nodes forming leaf nodes in said optical distribution network;
a splitting unit for distributing said one or more signals to said plurality of output units; **characterised by** said remote node further comprising
an additional signal path connecting one of said output units to the input unit of said remote node to enable said remote node to transmit an optical waveband from a first leaf node connected to said optical distribution network through said splitting unit and said input unit to other leave nodes attached to said optical distribution network.

7. The remote node of claim 6, wherein said additional signal path comprises a first waveband demultiplexer connected to said first leaf node for demultiplexing the optical waveband received from said first leaf node; and/or
said signal path comprises a waveband multiplexer connected to said *input unit* through which said distribution network receives the signals to be distributed to the nodes of said optical distribution tree, said waveband multiplexer being adapted for multiplexing said optical waveband onto said input unit.

8. The remote node of claim 6 or 7, wherein
the splitter unit comprises a wavelength demultiplexer for distributing the one or more signals received from the input unit to the leaf nodes of said distribution network.

9. The remote node of one of claims 6 to 8, wherein said remote node is adapted such that the optical waveband is transmitted upstream towards said demultiplexer where said optical waveband is split off from the remaining signal, further transmitted to said multiplexer and from there fed downstream towards said splitter to be distributed to the other nodes of said distribution tree, or
said optical waveband is transmitted directly from said first leaf node via a dedicated cable and without need for demultiplexing to said input unit.

10. The remote node of one of claims 6 to 9, wherein
said first leaf node is a first base station which is connected via a link to a second base station connected to another optical distribution network; and/or
said optical waveband is an optical signal which is received by said first leaf node being a first base station from said leaf node connected to a different optical distribution network being a second base station and then transmitted from said first base station via said signal path, preferably said demultiplexer, said multiplexer and said splitter, to the other optical nodes of said distribution tree, where one or more of said other optical nodes are third base stations.

11. The remote node of one of claims 7 to 10, wherein said first base station strips off its own wavelength of the optical waveband and forwards the remaining part of the optical waveband to said demultiplexer.

12. The optical distribution tree of one of claims 7 to 11, wherein the optical waveband received from said first leaf node comprises a waveband, preferably carrying a protection signal which has been received by said first leaf node from a leaf node connected to a different optical distribution network, and/or said remote node further comprising:
a filter located between said splitter and said first base station for filtering the waveband of said protection signal.

13. The remote node of one of claims 7 to 12, wherein
said demultiplexer is a multiplexer/demultiplexer;
said multiplexer is a multiplexer/demultiplexer;
said remote node being adapted such that signals from said third base stations attached to said optical distribution network are transmitted upstream, demultiplexed by a multiplexer/demultiplexer comprised by said input unit, are forwarded to a multiplexer/demultiplexer connected to said first leaf node and forwarded via said multiplexer/demultiplexer towards said first leaf node, transmitted from said first leaf node to said second leaf node, and forwarded from said second leaf node towards an central office or an optical line terminal.

14. The remote node of one of claims 6 to 13, wherein
said optical waveband is a protection signal which is transmitted via said second leaf node, the link between said second and said first leaf node, said demultiplexer, said multiplexer and said splitter towards the other leaf nodes attached to said optical distribution network to avoid a failure of the nodes attached to said optical distribution network.

15. The system of one of claims 1 to 5 or the remote node of one of claims 6 to 14, comprising one or more of the following:
a module for performing a wavelength conversion of the optical waveband when it is transmitted by either said second leaf node or by said first leaf node;
a detector for detecting a failure in said first distribution tree and for triggering the transmission of said optical waveband via a leaf of said second distribution tree to said *first distribution tree.*

## Patentansprüche

1. Ein System zum Verbinden von einen oder mehrere Blattknoten, die an den Blättern eines optischen Verteilungsnetwerks (ODN) angeschlossen sind, aufweisend:
ein erstes und ein zweites optisches Verteilungsnetwerk, die jeweils einen entfernten Knoten aufweisen zum verteilen von Signalen durch den entfernten Knoten über eine Stamm-Zuführ-Faser von einem Central Office und/oder ein optischen Leitungs-Terminal zu einer Mehrzahl von Blattknoten, die mit dem optischen Verteilungsnetwerk verbunden sind:
ein Link, der einen ersten Blattknoten, der mit dem ersten optischen Verteilungsnetwerk verbunden ist, mit einem zweiten Blattknoten verbindet, der mit dem zweiten optischen Verteilungsnetwerk verbunden ist, wobei
der entfernte Knoten des zweiten optischen Verteilungsnetwerk eine Eingangseinheit aufweist, die angepasst ist, Signale von dem Central Office und/oder dem optischen Leitungs-Terminal des zweiten optischen Verteilungsnetwerks zu empfangen, wobei das System **gekennzeichnet ist dadurch**, dass
der entfernte Knoten ferner einen zusätzlichen Signalpfad aufweist, der den zweiten Blattknoten mit der Eingangseinheit des entfernten Knotens verbindet, um den entfernten Knoten in die Lage zu versetzen, ein optisches Signal von dem zweiten Blattknoten weiterzuleiten, der das Signal von den ersten Blattknoten empfangen hat, zu den anderen Blattknoten des zweiten optischen Verteilungsnetwerks, um **dadurch** es zu ermöglichen, einen Ausfall in der Stamm-Zuführ-Faser zu kompensieren durch Routing des Signals, das für Blattknoten des zweiten optischen Verteilungsnetwerks bestimmt ist, zu dem ersten optischen Verteilungsnetwerk über den ersten Blattknoten und den Link zu dem zweiten Blattknoten und dann über den zusätzlichen Signalpfad zu dem Blattknoten des zweiten optischen Verteilungsnetwerks.

2. Das System nach Anspruch eins, wobei die Mehrzahl von Blattknoten eine oder mehrere Basisstationen aufweist; und/oder
der erste Blattknoten und der zweite Blattknoten Basisstationen sind

3. Das System nach Anspruch 1 oder 2, wobei
das optischen Verteilungsnetwerk geteilt wird zwischen einem Festnetz-Betreiber und einem Mobilfunk- Netzbetreiber, wobei die Clients des Festnetz-Betreibers als Clients optische Netzerk-Units aufweisen, die als Blattknoten verbunden sind ohne geschützt zu sein durch Verbindung mit zumindest einem anderen Blatt oder einem anderen optischen Verteilungsbaum, und die Clients des Mobilfunk-Netzbetreibers Basisstationen aufweisen, die als Blattknoten verbunden sind und gegen Ausfall geschützt sind durch Verbindung mit zumindest einem anderen Blattknoten des optischen Verteilungsnetzwerks.

4. Das System nach einem der Ansprüche 1 bis 3, wobei
das System angepasst ist, im Fall eines Ausfalls der Verbindung zwischen einem Central Office und dem entfernten Knoten des zweiten optischen Verteilungsnetzwerks das optische Signal weiterzuleiten, das bestimmt ist für die Blattknoten des zweiten optischen Verteilungsnetzwerks, über das erste optischen Verteilungsnetzwerk an den ersten Blattknoten, über den Link von dem ersten Blattknoten zu dem zweiten Blattknoten, und über den entfernten Knoten des zweiten optischen Verteilungsnetzwerks von dem zweiten Blattknoten zu den anderen Basisstationen, die mit dem zweiten optischen Verteilungsnetzwerk verbunden sind, und/oder das System angepasst ist zum Weiterleiten, im Fall eines Ausfalls der Verbindung zwischen dem entfernten Knoten des zweiten optischen Verteilungsnetzwerks und dem zweiten Blattknoten, des optischen Signals, das bestimmt ist für den zweiten Blattknoten des zweiten optischen Verteilungsnetzwerks über das erste optischen Verteilungsnetzwerks zu den ersten Blattknoten und über den Link von dem ersten Blattknoten zu dem zweiten Blattknoten.

5. Das System nach einem der Ansprüche 1 bis 4, wobei
der Link zwischen dem ersten Blattknoten und dem zweiten Blattknoten ein drahtloser Link ist.

6. Ein entfernter Knoten für ein optisches Verteilungsnetzwerk, das ein Central Office und/oder ein optisches Leitungsterminal mit einer Mehrzahl von optischen Knoten verbindet, wobei der entfernte Knoten aufweist:
eine Eingangseinheit, um mit zumindest einer Zuführfaser verbunden zu werden zum Empfangen von einem oder mehreren Signalen von dem Central Office und/oder dem optischen Leitungsterminal;
eine Mehrzahl von Ausgangseinheiten, die verbunden sind mit jeweiligen Verteilungsfasern des optischen Verteilungsnetzwerks, wobei die Verteilungsfasern verbunden sind mit jeweiligen optischen Knoten, die Blattknoten in dem optischen Verteilungsnetzwerk bilden;
eine Splitting-Einheit zum Verteilen der ein oder mehreren Signale an die Mehrzahl von Ausgangseinheiten, **dadurch gekennzeichnet, dass** der entfernte Knoten ferner aufweist:
einen zusätzlichen Signalpfad, der eine der Ausgangseinheiten mit der Eingangseinheit des entfernten Knotens verbindet, um den entfernten Knoten in die Lage zu versetzen, ein optisches Wellenband von einem ersten Blattknoten weiterzuleiten, der mit dem optischen Verteilungsnetzwerk verbunden ist, an das zweite optische Verteilungsnetzwerk, durch die splitting-Einheit und die Eingangs Einheit zu anderen Blattknoten, die an dem optischen Verteilungsnetzwerk angeschlossen sind.

7. Der entfernte Knoten von Anspruch 6, wobei der zusätzliche Signalpfad einen ersten Wellenband-Demultiplexer aufweist, der mit dem ersten Blattknoten verbunden ist, zum Demultiplexen des optischen Wellenbands, das von dem ersten Blattknoten empfangen wird; und/oder der Signalpfad einen Wellenband-Multiplexer aufweist, der mit der Eingangseinheit verbunden ist, durch den das Verteilungsnetzwerk die Signale empfängt, die zu verteilen sind an die Knoten des optischen Verteilungsbaums, wobei der Wellenband-Multiplexer angepasst ist zum Multiplexen des optischen Wellenbands auf die Eingangseinheit.

8. Der entfernte Knoten von Anspruch 6 oder 7, wobei
die Splitting-Einheit einen Wellenlängen-Demultiplexer aufweist zum Verteilen der ein oder mehreren Signale, die empfangen werden von der Eingangseinheit, an die Blattknoten des Verteilungsnetzwerks.

9. Der entfernte Knoten nach einem der Ansprüche 6 bis 8, wobei
der entfernte Knoten so angepasst ist, dass das optische Wellenband upstream übertragen wird zu dem Demultiplexer, wobei das optische Wellenband abgespalten wird von den verbleibenden Signal, ferner übertragen wird an den Multiplexer und von dort downstream eingespeist wird in den Splitter, um verteilt zu werden auf die anderen Knoten des Verteilungsbaums, oder
das optische Wellenband direkt an die Eingangseinheit übertragen wird von dem ersten Blattknoten über ein dediziertes Kabel und ohne Notwendigkeit zum Demultiplexen.

10. Der entfernte Knoten nach einem der Ansprüche 6 bis 9, wobei
der erste Blattknoten eine erste Basisstation ist, die über einen Link verbunden ist mit einer zweiten Basisstation, die verbunden ist mit einem anderen optischen Verteilungsnetzwerk; und/oder
das optische Wellenband ein optisches Signal ist, dass empfangen wird durch den ersten Blattknoten, der eine Basisstation ist, von dem Blattknoten, der verbunden ist mit einem anderen optischen Verteilungsnetzwerk, der eine zweite Basisstation ist, und dann übertragen wird von der ersten Basisstation über den Signalpfad, vorzugsweise den Demultiplexer, den Multiplexer und den Splitter, zu den anderen Knoten des Verteilungsbaums, wobei einer oder mehrere der anderen optischen Knoten dritte Basisstationen sind.

11. Der entfernte Knoten nach einem der Ansprüche 7 bis 10, wobei die erste Basisstation ihre eigene Wellenlänge von dem optischen Wellenband abstreift und den verbleibenden Teil des optischen Wellenbands an den Demultiplexer weiterleitet.

12. Der optische Verteilungsbaum nach einem der Ansprüche 7 bis 11, wobei das optische Wellenband, dass empfangen wird von dem ersten Blattknoten, ein Wellenband aufweist, vorzugsweise tragend ein Schutzsignal, das empfangen wurde durch den ersten Blattknoten von einem Blattknoten, der verbunden ist mit einem anderen optischen Verteilungsnetzwerk, und/oder wobei der entfernte Knoten ferner aufweist:
einen Filter, der angeordnet ist zwischen dem Splitter und der ersten Basisstation zum Filtern des Wellenbands des Schutzsignals.

13. Der entfernte Knoten nach einem der Ansprüche 7 bis 12, wobei
der Demultiplexer ein Multiplexer/Demultiplexer ist,
der Multiplexer ein Multiplexer/Demultiplexer ist,
der entfernte Knoten angepasst ist so, dass Signale von den dritten Basisstationen, die angeschlossen sind an das optische Verteilungsnetzwerk, upstream übertragen werden, ge-demultiplext werden duch einen Multiplexer/Demultiplexer, der in der Eingangseinheit enthalten ist, und weitergeleitet wird an einen Multiplexer/Demultiplexer, der verbunden ist mit dem ersten Blattknoten und weitergeleitet wird über den Multiplexer/Demultiplexer zu dem ersten Blattknoten, übertragen wird von dem ersten Blattknoten an einen zweiten Blattknoten, und weitergeleitet wird von dem zweiten Blattknoten an ein Central Office oder ein optisches Leitungsterminal.

14. Der entfernte Knoten nach einem der Ansprüche 6 bis 13, wobei
das optische Wellenband ein Schutzsignal ist, dass übertragen wird durch den zweiten Blattknoten, den Link zwischen dem zweiten und dem ersten Blattknoten, den Demultiplexer und den Splitter zu den anderen Blattknoten, die an dem optischen Verteilungsnetzwerk angeschlossen sind, um einen Ausfall der Knoten zu vermeiden, die an dem optischen Verteilungsnetzwerk angeschlossen sind.

15. Das System nach einem der Ansprüche 1 bis 5 oder der entfernte Knoten nach einem der Ansprüche 6 bis 14, aufweisend eines oder mehrere der folgenden:
ein Modul zum Durchführen einer Wellenlängen-Konversion des optischen Wellenbands, wenn es übertragen wird durch entweder den zweiten Blattknoten oder durch den ersten Blattknoten;
ein Detektor zum Detektieren eines Ausfalls in dem ersten Verteilungsbaum und zum Auslösen der Übertragung des optischen Wellenbandes über ein Blatt des zweiten Verteilungsbaums zu dem ersten Verteilungsbaum.

## Revendications

1. Système pour interconnecter un ou plusieurs noeuds feuilles attachés aux feuilles d'un réseau de distribution optique (ODN), comprenant :
un premier et un deuxième réseau de distribution optique comprenant respectivement un noeud distant pour distribuer des signaux reçus par ledit noeud distant par l'intermédiaire d'une fibre tronc d'alimentation à partir d'un poste central et/ou d'un terminal de ligne optique à une pluralité de noeuds feuilles connectés audit réseau de distribution optique ;
une liaison connectant un premier noeud feuille connecté au premier réseau de distribution optique à un deuxième noeud feuille connecté au deuxième réseau de distribution optique, dans lequel
le noeud distant du deuxième réseau de distribution optique comprend une unité d'entrée adaptée pour recevoir des signaux provenant du poste central et/ou du terminal de ligne optique du deuxième réseau de distribution optique, le système étant **caractérisé en ce que** ledit noeud distant comprend en outre un chemin de signal additionnel connectant ledit deuxième noeud feuille à l'unité d'entrée dudit noeud distant pour permettre audit noeud distant de retransmettre un signal optique dudit deuxième noeud feuille qui a reçu le signal à partir dudit premier noeud feuille aux autres noeuds feuilles dudit deuxième réseau de distribution optique permettant ainsi de compenser une défaillance dans ladite fibre tronc en acheminant le signal destiné aux noeuds feuilles dudit deuxième réseau de distribution optique audit premier réseau de distribution optique, par l'intermédiaire dudit premier noeud feuille et de ladite liaison, audit deuxième noeud feuille et ensuite, par l'intermédiaire du chemin de signal additionnel, aux noeuds feuilles dudit deuxième réseau de distribution optique.

2. Système selon la revendication 1, dans lequel ladite pluralité de noeuds feuille comprend une ou plusieurs stations de base ; et/ou
ledit premier noeud feuille et ledit deuxième noeud feuille sont des stations de base.

3. Système selon la revendication 1 ou 2, dans lequel
ledit réseau de distribution optique est partagé entre un opérateur de réseau fixe et un opérateur de réseau mobile, les clients dudit opérateur de réseau fixe comprenant comme clients des unités de réseau optique qui sont connectées comme des noeuds feuilles sans être protégés en étant connectées à au moins une autre feuille d'un autre arbre de distribution optique, et les clients dudit opérateur de réseau mobile comprenant des stations de base qui sont connectées comme des noeuds feuilles sont protégés contre une défaillance en étant connectés à au moins un autre noeud feuille dudit autre réseau de distribution optique.

4. Système selon une des revendications 1 à 3, dans lequel
ledit système est adapté pour retransmettre, en cas de défaillance de la connexion entre un poste central et le noeud distant dudit deuxième réseau de distribution optique, ledit signal optique destiné aux noeuds feuilles dudit deuxième réseau de distribution optique par l'intermédiaire du premier réseau de distribution optique audit premier noeud feuille, par l'intermédiaire de ladite liaison dudit premier noeud feuille audit deuxième noeud feuille et, par l'intermédiaire dudit noeud distant dudit deuxième réseau de distribution optique dudit deuxième noeud feuille aux autres stations de base connectées audit deuxième réseau de distribution optique, et/ou
ledit système est adapté pour retransmettre, en cas de défaillance de la connexion entre le noeud distant dudit deuxième réseau de distribution optique et ledit deuxième noeud feuille, ledit signal optique destiné audit deuxième noeud feuille dudit deuxième réseau de distribution optique, par l'intermédiaire du premier réseau de distribution optique, audit premier noeud feuille et par l'intermédiaire de ladite liaison dudit premier noeud feuille audit deuxième noeud feuille.

5. Système selon une des revendications 1 à 4, dans lequel
la liaison entre ledit premier noeud feuille et ledit deuxième noeud feuille est une liaison sans fil.

6. Noeud distant pour un réseau de distribution optique qui connecte un poste central et/ou un terminal de ligne optique à une pluralité de noeuds optiques, ledit noeud distant comprenant :
une unité d'entrée destinée à être connectée à au moins une fibre d'alimentation pour recevoir un ou plusieurs signaux provenant dudit poste central et/ou d'un terminal de ligne optique ;
une pluralité d'unités de sortie qui sont connectées à des fibres de distribution respectives dudit réseau de distribution optique, lesdites fibres de distribution étant connectées à des noeuds optiques respectifs formant des noeuds feuilles dans ledit réseau de distribution optique ;
une unité de séparation pour distribuer lesdits un ou plusieurs signaux à ladite pluralité d'unités de sortie optique ; **caractérisé en ce que** ledit noeud distant comprend en outre
un chemin de signal additionnel connectant une desdites unités de sortie à l'unité d'entrée dudit noeud distant pour permettre audit noeud distant de transmettre une bande d'ondes optiques d'un premier noeud feuille connecté audit réseau de distribution optique par l'intermédiaire de ladite unité de séparation et ladite unité d'entrée à d'autres noeuds feuilles attachés audit réseau de distribution optique.

7. Noeud distant selon la revendication 6, dans lequel ledit chemin de signal additionnel comprend un premier démuitiplexeur de bande d'ondes connecté audit premier noeud feuille pour démultiplexer la bande d'ondes optiques reçue à partir dudit premier noeud feuille ; et/ou
ledit chemin de signal comprend un multiplexeur de bande d'ondes connecté à ladite unité d'entrée à travers laquelle ledit réseau de distribution reçoit les signaux à distribuer aux noeuds dudit arbre de distribution optique, ledit multiplexeur de bande d'ondes étant adapté pour multiplexer ladite bande d'ondes optiques sur ladite unité d'entrée.

8. Noeud distant selon la revendication 6 ou 7, dans lequel
l'unité de séparation comprend un démultiplexeur de longueur d'onde pour distribuer l'un ou les plusieurs signaux reçus à partir de l'unité d'entrée aux noeuds feuilles dudit réseau de distribution.

9. Noeud distant selon une des revendications 6 à 8, dans lequel ledit noeud distant est adapté de manière que la bande d'ondes optiques soit transmise en amont vers ledit démultiplexeur où ladite bande d'ondes optiques est séparée du signal restant, transmise en outre audit multiplexeur et, de là, alimentée en aval vers ledit séparateur pour être distribuée aux autres noeuds dudit arbre de distribution, ou
ladite bande d'ondes optiques est transmise directement dudit premier noeud feuille, par l'intermédiaire d'un câble dédié et sans nécessité d'un démultiplexage, à ladite unité d'entrée.

10. Noeud distant selon une des revendications 6 à 9, dans lequel
ledit premier noeud feuille est une première station de base qui est connectée par l'intermédiaire d'une liaison à une deuxième station de base connectée à un autre réseau de distribution optique ; et/ou
ladite bande d'ondes optiques est un signal optique qui est reçu par ledit premier noeud feuille qui est une première station de base à partir dudit noeud feuille connecté à un réseau de distribution optique différent qui est une deuxième station de base et transmis ensuite de ladite première station de base, par l'intermédiaire dudit chemin de signal, de préférence dudit démultiplexeur, dudit multiplexeur et dudit séparateur, aux autres noeuds optiques dudit arbre de distribution, où un ou plusieurs desdits autres noeuds optiques sont des troisièmes stations de base.

11. Noeud distant selon une des revendications 7 à 10, dans lequel ladite première station de base élimine sa propre longueur d'onde de la bande d'ondes optiques et retransmet la partie restante de la bande d'ondes optiques audit démultiplexeur.

12. Arbre de distribution optique selon une des revendications 7 à 11, dans lequel la bande d'ondes optiques reçue à partir dudit premier noeud feuille comprend une bande d'ondes, de préférence transportant un signal de protection qui a été reçu par ledit premier noeud feuille à partir d'un noeud feuille connecté à un réseau de distribution optique différent, et/ou ledit noeud distant comprenant en outre :
un filtre situé entre ledit séparateur et ladite première station de base pour filtrer la bande d'ondes dudit signal de protection.

13. Noeud distant selon une des revendications 7 à 12, dans lequel
ledit démultiplexeur est un multiplexeur/démultiplexeur ;
ledit multiplexeur est un multiplexeur/démultiplexeur ;
ledit noeud distant étant adapté de manière que des signaux provenant desdites troisièmes stations de base attachées audit réseau de distribution optique soient transmis en amont, démultiplexés par un multiplexeur/démultiplexeur compris par ladite unité d'entrée, soient retransmis à un multiplexeur/démultiplexeur connecté audit premier noeud feuille et retransmis par l'intermédiaire dudit multiplexeur/démultiplexeur vers ledit premier noeud feuille, transmis dudit premier noeud feuille audit deuxième noeud feuille, et retransmis dudit deuxième noeud feuille vers un poste central ou un terminal de ligne optique.

14. Noeud distant selon une des revendications 6 à 13, dans lequel
ladite bande d'ondes optiques est un signal de protection qui est transmis par l'intermédiaire dudit deuxième noeud feuille, la liaison entre ledit deuxième et ledit premier noeud feuille, ledit démultiplexeur, ledit multiplexeur et ledit séparateur vers les autres noeuds feuilles attachés audit réseau de distribution optique pour éviter une défaillance des noeuds attachés audit réseau de distribution optique.

15. Système selon une des revendications 1 à 5 ou noeud distant selon une des revendications 6 à 14, comprenant en outre un ou plusieurs des éléments suivants :
un module pour effectuer une conversion de longueur d'onde de la bande d'ondes optiques quand elle est transmise soit par ledit deuxième noeud feuille soit par ledit premier noeud feuille ;
un détecteur pour détecter une défaillance dans ledit premier arbre de distribution et pour déclencher la transmission de ladite bande d'ondes optiques par l'intermédiaire d'une feuille dudit deuxième arbre de distribution audit premier arbre de distribution.
